# EUROPÄISCHE PATENTSCHRIFT

(11) **EP 3 033 588 B1**
(45) Veröffentlichungstag und Bekanntmachung des Hinweises auf die Patenterteilung: **05.04.2017**
(21) Anmeldenummer: 14750515.0
(22) Anmeldetag: 13.08.2014
(51) Int. Cl.: G01B 11/25, G03B 21/00

(54) **VERFAHREN UND VORRICHTUNG ZUM BERÜHRUNGSLOSEN VERMESSEN VON OBERFLÄCHENKONTUREN**
METHOD AND DEVICE FOR NON-CONTACT MEASURING OF SURFACE CONTOURS
PROCÉDÉ ET DISPOSITIF POUR LA MESURE SANS CONTACT DE CONTOURS DE SURFACES

(30) Priorität: 14.08.2013 DE 102013013791
(43) Veröffentlichungstag der Anmeldung: 22.06.2016
(73) Patentinhaber: Fraunhofer Gesellschaft zur Förderung der angewandten Forschung E.V., 80686 München (DE)
(72) Erfinder: HEIST, Stefan, 07743 Jena (DE); KÜHMSTEDT, Peter, 07751 Jena (DE); NOTNI, Gunther, 07749 Jena (DE)
(74) Vertreter: Pfenning, Meinig & Partner mbB
(86) Internationale Anmeldenummer: PCT/EP2014/067371
(87) Internationale Veröffentlichungsnummer: WO 2015/022384

(56) Entgegenhaltungen:
- BRÄUER-BURCHARDT CHRISTIAN ET AL: "On the accuracy of point correspondence methods in three-dimensional measurement systems using fringe projection", OPTICAL ENGINEERING, SOC. OF PHOTO-OPTICAL INSTRUMENTATION ENGINEERS, BELLINGHAM, Bd. 52, Nr. 6, 1. Juni 2013 (2013-06-01), Seite 63601, XP060025862, ISSN: 0091-3286, DOI: 10.1117/1.OE.52.6.063601 [gefunden am 2013-06-03]
- CHAO ZUO ET AL: "High-speed three-dimensional shape measurement for dynamic scenes using bi-frequency tripolar pulse-width-modulation fringe projection", OPTICS AND LASERS IN ENGINEERING, Bd. 51, Nr. 8, 22. März 2013 (2013-03-22), Seiten 953-960, XP055149851, ISSN: 0143-8166, DOI: 10.1016/j.optlaseng.2013.02.012
- STEFAN HEIST ET AL: "High-speed 3D shape measurement using array projection", PROCEEDINGS OF SPIE, Bd. 8788, 13. Mai 2013 (2013-05-13), Seite 878815, XP055149852, ISSN: 0277-786X, DOI: 10.1117/12.2020539
- MARC HONEGGER ET AL: "Scanning fringe projection for fast 3D inspection", PROCEEDINGS OF SPIE, Bd. 8788, 13. Mai 2013 (2013-05-13), Seite 878814, XP055149959, ISSN: 0277-786X, DOI: 10.1117/12.2020260
- STEFAN HEIST ET AL: "Array projection of aperiodic sinusoidal fringes for high-speed three-dimensional shape measurement", OPTICAL ENGINEERING, Bd. 53, Nr. 11, 1. Mai 2014 (2014-05-01), Seite 112208, XP055149522, ISSN: 0091-3286, DOI: 10.1117/1.OE.53.11.112208

## Beschreibung

Die Erfindung betrifft ein Verfahren zum berührungslosen Vermessen dreidimensionaler Oberflächenkonturen nach dem Oberbegriff des Hauptanspruchs sowie eine Vorrichtung zum berührungslosen Vermessen dreidimensionaler Oberflächenkonturen nach dem Oberbegriff des Nebenanspruchs, mit dem das Verfahren durchgeführt werden kann.

Bei einem gattungsgemäßen Verfahren wird mittels einer Projektionsvorrichtung eine Folge von jeweils aus einer Vielzahl von Streifen gebildeten Streifenmustern gleicher Streifenrichtung auf eine zu vermessende Oberfläche projiziert, wobei während des Projizierens jedes der Streifenmuster jeweils mindestens ein Bild der Oberfläche mit einer Kamera oder mit jeder von mindestens zwei Kameras aufgenommen wird. Mittels der auf die Oberfläche projizierten Streifenmuster werden dann korrespondierende Punkte in Bildebenen der Kamera und der Projektionsvorrichtung oder in Bildebenen der Kameras identifiziert, worauf Raumkoordinaten von Oberflächenpunkten auf der Oberfläche durch Triangulation auf Basis der als korrespondierend identifizierten Punkte bestimmt werden.

Solche Verfahren sind z.B. aus den Druckschriften DE 10 2007 022 361 A1 und DE 10 2006 049 695 A1 bekannt. Eine übliche Ausgestaltung solcher Verfahren sieht vor, dass einige der projizierten Streifenmuster phasenversetzte Streifenmuster mit sinusförmigem Helligkeitsverlauf sind, die es erlauben, jedem Punkt auf der Oberfläche einen Phasenwert zuzuordnen, während einige weitere der projizierten Streifenmuster einen Gray-Code definieren, der eine nach Bestimmung der Phasenwerte noch verbleibende Mehrdeutigkeit aufzulösen erlaubt.

Weitere Verfahren sind aus den Veröffentlichungen Bräuer-Burchardt et al. "On the accuracy of point correspondence methods in three-dimensional measurement systems using fringe projection" in Optical Engineering 52(6), 2013 und aus Chao Zuo et al. "High-speed three-dimensional shape measurement for dynamic scenes using bi-frequency tripolar pulse-width-modulation fringe projection" in Optics and Lasers in Engineering 51, 2013, bekannt.

Eine Schwierigkeit, die sich bei derartigen auf Musterprojektion beruhenden Triangulationsverfahren ergibt, liegt darin, dass eine verhältnismäßig große Anzahl von Mustern projiziert und entsprechend viele Bilder aufgenommen werden müssen, damit die korrespondierenden oder homologen Punkte in den Bildebenen eindeutig und hinreichend genau identifiziert werden können, was natürlich nicht in beliebig kurzer Zeit geschehen kann. Daher erfordert die Vermessung von Oberflächenkonturen mit den aus dem Stand der Technik bekannten Verfahren dieser Art eine verhältnismäßig lange Messdauer. Das ist für viele Anwendungen nachteilig, insbesondere wenn bewegte Oberflächen zu vermessen sind oder wenn dazu ein handgehaltenes Gerät verwendet werden soll.

Der Erfindung liegt daher die Aufgabe zugrunde, ein Verfahren zum möglichst genauen berührungslosen Vermessen dreidimensionaler Oberflächen vorzuschlagen, das mit vergleichsweise kurzen Messzeiten auskommt. Der Erfindung liegt ferner die Aufgabe zugrunde, eine entsprechende Vorrichtung zu entwickeln, die eine berührungslose Vermessung einer Oberflächenkontur mit hoher Genauigkeit und dabei ausgesprochen kurzen Messzeiten ermöglicht.

Diese Aufgabe wird erfindungsgemäß gelöst durch ein Verfahren mit den kennzeichnenden Merkmalen des unabhängigen Anspruchs 1 in Verbindung mit den Merkmalen des Oberbegriffs des unabhängigen Anspruchs 1 sowie durch eine Vorrichtung mit den kennzeichnenden Merkmalen des unabhängigen Anspruchs 7 in Verbindung mit den Merkmalen des Oberbegriffs des unabhängigen Anspruchs 7.

Durch das Aufnehmen der Bilder während des Projizierens der Streifenmuster wird für jeden der Punkte, auf Basis derer die Triangulation stattfinden soll, eine Folge von Helligkeitswerten erfasst. Dadurch, dass die projizierten Streifenmuster nun zwar in einer Umgebung jedes der Streifen einen jeweils sinusförmigen Helligkeitsverlauf haben, aber jeweils aperiodisch sind, ergibt sich auf jedem Oberflächenpunkt eine quasi statistische Folge von Helligkeitswerten, wobei diese Folge schon für geringfügig beabstandete Oberflächenpunkte unterscheidbar anders ausfallen wird. Dadurch wird es möglich, die korrespondierenden Punkte mit hoher Genauigkeit durch Maximieren einer Korrelation zwischen für jeden der Punkte erfassten Folgen von Helligkeitswerten zu identifizieren, was vergleichsweise schnell geschehen kann. Diese Aussage über die Schnelligkeit bezieht sich dabei in erster Linie auf die durch die Anzahl der Kameraaufnahmen gegebene Messzeit, nicht unbedingt auf die Auswertezeit, weil z. B. Phasenwerte oft schneller berechnet werden können als die Korrelation zwischen den Bildpunkten der Kameras.

In dem typischen Fall, dass zwei Kameras zum Aufnehmen der Bilder verwendet werden und auf Basis der korrespondierenden Punkte in den Bildebenen dieser Kameras trianguliert wird, ist es dabei nicht einmal nötig, die projizierten Streifenmuster genau zu kennen. Möglich ist aber auch eine Triangulation auf Basis jeweils eines Punktes in der Bildebene einer einzigen Kamera und eines dazu korrespondierenden Punktes oder homologen Punktes - beide Begriffe werden hier synonym verwendet - in der Bildebene der Projektionsvorrichtung, weil sich auch in letzterer durch die Folge von Streifenmustern jeweils für jeden Punkt eine charakteristische Folge von Helligkeitswerten ergibt.

Entsprechend vorteilhaft ist auch eine Vorrichtung zum berührungslosen Vermessen dreidimensionaler Oberflächenkonturen vorgeschlagener Art, die eine Projektionsvorrichtung zum Projizieren von Streifenmustern in einen Objektraum, eine Kamera oder mindestens zwei Kameras zum Aufnehmen von Bildern einer zu vermessenden Oberfläche im Objektraum und eine Steuer- und Auswerteeinheit zum Ansteuern der Projektionsvorrichtung und der Kamera oder der Kameras und zum Auswerten der damit aufgenommenen Bilder umfasst und die sich zur Durchführung des hier beschriebenen Verfahrens eignet. Die Steuer- und Auswerteeinheit dieser Vorrichtung ist erfindungsgemäß eingerichtet,
- die Projektionsvorrichtung zum Projizieren einer Folge von jeweils aus einer Vielzahl von Streifen gebildeten Streifenmustern gleicher Streifenrichtung anzusteuern,
- die Kamera oder jede der Kameras zum Aufnehmen jeweils mindestens eines Bildes der Oberfläche während des Projizierens jedes der Streifenmuster anzusteuern,
- korrespondierende Punkte in Bildebenen der Kamera und der Projektionsvorrichtung oder in Bildebenen der mindestens zwei Kameras mittels der projizierten Streifenmuster durch Maximieren einer Korrelation zwischen für jeden der Punkte erfassten Folgen von Helligkeitswerten zu identifizieren und
- Raumkoordinaten von Oberflächenpunkten auf der Oberfläche durch Triangulation auf Basis der als korrespondierend identifizierten Punkte zu bestimmen,
wobei die Projektionsvorrichtung eingerichtet ist, die Streifenmuster jeweils als aperiodische Streifenmuster zu projizieren, die in einer Umgebung jedes der Streifen einen jeweils sinusförmigen Helligkeitsverlauf haben.

Das "Maximieren einer Korrelation zwischen für jeden der Punkte erfassten Folgen von Helligkeitswerten" ist - bei dem beschriebenen Verfahren wie bei der Einrichtung der Steuer- und Auswerteeinheit der entsprechenden Vorrichtung - wie folgt zu verstehen:
Mit dem Aufnehmen jeweils mindestens eines Bildes der Oberfläche mit der Kamera bzw. mit jeder der mindestens zwei Kameras wird für eine Vielzahl von Punkten in den Bildebenen der Kamera und der Projektionsvorrichtung bzw. in Bildebenen der Kameras jeweils eine Folge von Helligkeitswerten erfasst. Für jeden Punkt in einer ersten der beiden Bildebenen wird nun der dazu korrespondierende bzw. homologe Punkt in der anderen Bildebene identifiziert, indem eine Vielzahl von potentiell korrespondierenden Punkten in der anderen Bildebene mit dem genannten Punkt in der ersten Bildebene verglichen werden durch Auswerten (oder Anwenden) einer Korrelationsfunktion für (bzw. auf) die Paare von Folgen von Helligkeitswerten, die für die zu vergleichenden Punkte erfasst worden sind. Der dem erstgenannten Punkt korrespondierende Punkt wird dann identifiziert als derjenige Punkt unter den potentiell korrespondierenen Punkten, für den die Korrelationsfunktion ein Maximum oder jedenfalls ein Extremum annimmt. Dabei genügt es, wenn nur solche Punkte in der anderen Bildebene als potentiell korrespondierende Punkte berücksichtigt werden, die jeweils auf einer dem jeweiligen Punkt in der ersten Bildebene korrespondierenden Epipolarlinie liegen.

Die Korrelationsfunktion kann in weiten Grenzen beliebig gewählt werden und muss nur die für Korrelationsfunktionen typische Eigenschaft zeigen, bei Identität der durch Auswertung der Korrelationsfunktion verglichenen Folgen ein Extremum - typischerweise ein Maximum - anzunehmen und diesem Extremum umso näher zu kommen, je ähnlicher die verglichenen Folgen sind. Sollte es sich bei diesem Extremum aufgrund der Definition der Korrelationsfunktion um ein Minimum handeln, so sei auch das Auffinden dieses Minimums als Maximieren im Sinne der vorliegenden Anmeldung zu verstehen.

Es sei ausdrücklich darauf hingewiesen, dass nicht ausgeschlossen ist, zusätzlich auch eine Folge von Streifenmustern mit anderer Streifenrichtung, mit beispielsweise zur Streifenrichtung der genannten Streifenmuster senkrechter Streifenrichtung zu projizieren. Ggf. könnte eine solche zusätzliche Folge nach der erstgenannten Folge von Streifenmustern oder mit dieser zeitlich verschachtelt projiziert werden. Das projizieren von Streifenmustern anderer Streifenrichtung ist jedoch zumindest dann nicht nötig, wenn man in einer weiter untern beschriebenen Weise von der Epipolargeometrie Gebrauch macht, was das Identifizieren der korrespondierenden Punkte zu einem eindimensionalen Problem macht.

Die geforderte Aperiodizität der Streifenmuster kann dadurch gegeben sein, dass eine Amplitude und/oder Ortsfrequenz der einzelnen Streifenmuster und/oder eine Phasenverschiebung zwischen den verschiedenen Streifenmustern nicht konstant ist. Wie viele aufeinanderfolgende Streifenmuster tatsächlich benötigt werden, um die korrespondierenden Punkte mit hinreichender Sicherheit eindeutig zu identifizieren, wird dabei von einer Oberflächenbeschaffenheit der zu vermessenden Oberfläche abhängen. Abhängig davon kann die Anzahl der für eine Vermessung projizierten und ausgewerteten Streifenmuster variiert werden. Die für die Folge von Streifenmustern gewählte Anzahl von Streifenmustern kann auch vom Verhältnis der Periodizität/Ortsfrequenz der Muster und der Kameraauflösung, von der angestrebten Ortsauflösung im Messvolumen und/oder von Umgebungsbedingungen, z.B. von Störlicht, abhängen. Diese Anzahl kann schließlich auch abhängig davon gewählt werden, ob bei einer gegebenen Situation eine möglichst kurze Messdauer oder die sichere Vermeidung von Ambiguitäten zur möglichst genauen Vermessung wichtiger ist.

Durch die vorgeschlagene Art der Streifenmuster und deren Auswertung zur Identifizierung korrespondierender oder homologer Punkte wird es auch möglich, aus einer längeren Sequenz fortlaufend wechselnder Streifenmuster jeweils eine bestimmte Anzahl unmittelbar aufeinander folgender Streifenmuster für eine Vermessung zu verwenden. Für die Vermessung wird dann also jeweils nur ein Ausschnitt aus der Sequenz von Streifenmustern verwendet, wobei dieser Ausschnitt nach Art eines Sliding Window mit der Sequenz fortlaufend projizierter Streifenmuster mitwandern kann. Vorteilhafterweise kann die einzelne Vermessung dabei mit allen notwendigen Auswertungsschritten durchgeführt werden, ohne dass dafür erst die Projektion einer ganz bestimmten Folge von Streifenmustern abgewartet werden müsste.

So kann die zu vermessende Oberfläche also kontinuierlichen erfasst werden, indem fortlaufend wechselnde Streifenmuster mit der Projektionsvorrichtung auf die Oberfläche projiziert werden, wobei die genannte Folge von Streifenmustern, die zum Identifizieren korrespondierender Punkte verwendet wird, jeweils durch eine Untermenge dieser projizierten Streifenmuster gebildet wird, die aus einer definierten Anzahl unmittelbar aufeinander folgender Streifenmuster besteht. Dementsprechend kann die Steuer- und Auswerteeinheit eingerichtet sein, zum kontinuierlichen Erfassen der Oberfläche die Projektionsvorrichtung zum Projizieren fortlaufend wechselnder Streifenmuster anzusteuern und die genannte zum Identifizieren korrespondierender Punkte verwendete Folge von Streifenmustern jeweils durch eine Untermenge dieser projizierten Streifenmuster zu bilden, die aus einer definierten Anzahl unmittelbar aufeinander folgender Streifenmuster besteht.

Der Schritt des Identifizierens der korrespondierenden Punkte kann dadurch vereinfacht werden, dass die zu maximierende Korrelation jeweils nur für Punkte auf korrespondierenden Epipolarlinien in den Bildebenen bestimmt wird. Dabei nutzt man die Tatsache aus, dass bei gegebener Geometrie der verwendeten Vorrichtung zu jedem Punkt in einer der Bildebenen überhaupt nur Punkte auf einer durch die Geometrie festgelegten Epipolarlinie in der jeweils anderen Bildebene als Kandidaten für den korrespondierenden oder homologen Punkt in dieser anderen Bildebene in Frage kommen. Dementsprechend vorteilhaft ist es, wenn die Steuer- und Auswerteeinheit der vorgeschlagenen Vorrichtung eingerichtet ist, zum Identifizieren der korrespondierenden Punkte die zu maximierende Korrelation jeweils nur für Punkte auf korrespondierenden Epipalarlinien in den Bildebenen zu bestimmen. Die Geometrie der Vorrichtung bzw. die Orientierung der Streifenmuster sollte dabei zweckmäßigerweise so gewählt werden, dass die Streifenrichtung und eine Richtung der Epipolarlinien einen möglichst großen Winkel, bestenfalls einen rechten Winkel, einschließen.

Besonders vorteilhaft ist es, wenn die Projektionsvorrichtung eine Vielzahl von Projektoren mit jeweils mindestens einer eigenen Lichtquelle enthält, von denen jeder zum Projizieren jeweils eines der Streifenmuster eingerichtet ist. Dann können die Streifenmuster nämlich beim Projizieren der Folge gewechselt werden, indem einfach zwischen den Lichtquellen der verschiedenen Projektoren umgeschaltet wird, indem also jeweils die Lichtquelle des Projektors oder jedes der Projektoren, die das gerade aktuelle Streifenmuster projizieren, ausgeschaltet wird, während die Lichtquelle des Projektors oder jedes der Projektoren, die das nächste Streifenmuster zu projizieren vorgesehen sind, angeschaltet werden. Die Steuer- und Auswerteeinheit kann zu dem Zweck eingerichtet sein, die Projektionsvorrichtung durch Umschalten zwischen den Lichtquellen der verschiedenen Projektoren zum Wechseln der Streifen muster beim Projizieren der Folge von Streifenmustern anzusteuern. Es ist also möglich, die verschiedenen Streifenmuster durch verschiedene in der Projektionsvorrichtung enthaltene Projektoren mit jeweils mindestens einer eigenen Lichtquelle zu projizieren, wobei die Streifenmuster beim Projizieren der Folge gewechselt werden, indem zwischen den Lichtquellen der verschiedenen Projektoren umgeschaltet wird. Dadurch kann die Folge von Streifenmustern mit gegebener Anzahl von Streifenmustern in einer besonders kurzen Zeit projiziert werden, weil ein Umschalten zwischen den Lichtquellen der verschiedenen Projektoren wesentlich schneller möglich ist als ein Bildwechsel in einem einzigen Projektor. In vorgeschlagener Weise lassen sich die zum Projizieren der Folge von Streifenmustern nötigen Bildwechsel also viel schneller durchführen, womit die für die Vermessung der Oberfläche nötige Messzeit drastisch reduziert werden kann. Je nach Art der Lichtquelle ist es dabei durchaus möglich, Bildwechselraten einer Größenordnung von 100 kHz zu realisieren. Die schnellen Bildwechsel wiederum machen es auch möglich, jeweils eine Folge von verhältnismäßig vielen Streifenmustern zu verwenden, was das Verfahren - gerade bei komplizierten Oberflächengeometrien - stabiler macht. Auch bei bewegten Objekten kann also durch die vorgeschlagene Art der Projektion eine vergleichsweise lange Mustersequenz projiziert werden, innerhalb derer das Objekt "quasistatisch" ist.

Bei den Lichtquellen kann es sich z.B. jeweils um eine oder mehrere LEDs oder um eine oder mehre Laserdioden handeln, die ein besonders schnelles Ein- und Ausschalten und damit eine besonders rasches Projizieren der Folge von Streifenmustern erlauben.

Eine besondere Ausführung sieht vor, dass die Projektoren in mehreren parallel zur Streifenrichtung orientierten Zeilen oder Spalten angeordnet sind, wobei jeweils mehrere der Projektoren zum Projizieren jedes der Streifenmuster eingerichtet sind und wobei die zum Projizieren jeweils eines der Streifenmuster eingerichteten Projektoren jeweils in einer der Zeilen oder Spalten oder in unmittelbar benachbarten Zeilen oder Spalten angeordnet sind. Die Projektoren können bei dieser Ausführung z.B. matrixförmig angeordnet sein. Wenn bei einer solchen Anordnung jedes der Streifenmuster jeweils mit mehreren der Projektoren projiziert wird, wobei die zum Projizieren jeweils eines der Streifenmuster verwendeten Projektoren jeweils aus einer der Zeilen oder Spalten oder aus unmittelbar benachbarten Zeilen oder Spalten ausgewählt werden, ergibt sich nämlich der Vorteil, dass jedes der Streifenmuster viel heller auf die zu vermessende Oberfläche projiziert werden kann, so dass auf der Oberfläche eine viel größere Beleuchtungsstärke realisiert wird als bei Verwendung nur jeweils eines einzigen Projektors. Wegen der Orientierung der Zeilen oder Spalten von Projektoren parallel zur Streifenrichtung lässt sich dabei vorteilhafter Weise eine Verschlechterung der Bildqualität vermeiden, weil es kein qualitätsminderndes Verschwimmen der Streifenmuster senkrecht zur Streifenrichtung gibt. Auch wenn die einzelnen Projektoren keine exakt sinusförmigen Helligkeitsverläufe zu projizieren in der Lage sein sollten, lässt sich ein lokal sinusförmiger Helligkeitsverlauf bei dieser Ausführung z.B. dadurch realisieren, dass die zur Projektion jeweils eines der Streifenmuster verwendeten Projektoren Streifen geringfügig unterschiedlicher Breite - bei gleicher Lage der Streifen - projizieren, also durch ein Sampling binärer Muster verschiedener Stegbreiten der einzelnen Projektoren oder Mikroprojektoren. Möglich ist auch die Erzeugung lokal sinusförmiger Helligkeitsverläufe durch leichtes "Fehlfokussieren" der (Mikro-)Projektoren, d. h. indem die Projektions-(Mikro-)Linse nicht exakt in der Brennebene der Kondensor-(Mikro-)Linse angeordnet wird.

Die im vorherigen Absatz beschriebene Ausführung erlaubt es, hinreichend helle Streifenmuster zu projizieren und dabei die Lichtquellen der Projektoren in erster Linie im Hinblick auf eine möglichst schnelle Schaltbarkeit auszuwählen. So können insbesondere im Fall einer Anordnung beschriebener Art trotz begrenzter Leuchtstärke LEDs verwendet werden, die ausgesprochen schnell an- und ausgeschaltet werden, was einen sehr raschen Wechsel zwischen den Streifenmustern erlaubt. Auch kann die Projektionsvorrichtung dadurch ausgesprochen flach und mithin kompakt ausgeführt werden.

Typischerweise - wenn auch nicht notwendigerweise - werden die Projektoren Durchlichtprojektoren sein und jeweils mindestens eine Projektionseinheit mit einer Kondensorlinse, einem festen bildgebenden Medium zur Erzeugung des jeweiligen Streifenmusters und einer Objektivlinse aufweisen. Das erlaubt es, die Projektionseinheiten bei Bedarf auf einem gemeinsamen transparenten Substrat zu realisieren, womit sich ein besonders kompakter Aufbau ergibt. Unter Umständen kann es vorteilhaft sein, wenn jeder der Projektoren jeweils mehrere durch die gleiche Lichtquelle ausgeleuchtete Projektionseinheiten umfasst. Dann können die einzelnen Projektionseinheiten besonders klein ausgeführt werden, was einen noch kompakteren Aufbau erlaubt.

Ein Ausführungsbeispiel der Erfindung wird nachfolgend anhand der Figuren 1 bis 5 erläutert. Es zeigt
- Fig. 1: in schematischer Darstellung eine Aufsicht auf eine Vorrichtung zum berührungslosen Vermessen dreidimensionaler Oberflächenkonturen,
- Fig. 2: einen Ausschnitt eines Querschnitts durch eine Projektionsvorrichtung, die Bestandteil der Vorrichtung aus Fig. 1 ist,
- Fig. 3: eine Aufsicht auf eine in der genannten Projektionsvorrichtung enthaltene Matrix von Projektoren,
- Fig. 4: eine Veranschaulichung einer Folge von Streifenmustern, die mit der genannten Projektionsvorrichtung projiziert werden, wenn eine Oberfläche mit der Vorrichtung aus Fig. 1 berührungslos vermessen wird, und
- Fig. 5: in diagrammatischer Darstellung am Beispiel von fünf Ausschnitten der Streifenmuster einen Helligkeitsverlauf dieser Streifenmuster.

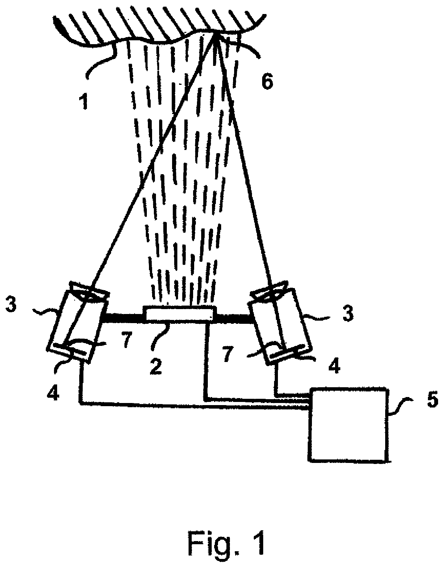

In Fig. 1 ist eine Vorrichtung gezeigt, die zum berührungslosen Vermessen dreidimensionaler Oberflächenkonturen geeignet ist. In einem Objektraum vor dieser Vorrichtung ist beispielhaft ein Testkörper mit einer zu vermessenden Oberfläche 1 dargestellt. Die Vorrichtung weist eine Projektionsvorrichtung 2 zum Projizieren von Streifenmustern in den Objektraum sowie zwei dazu symmetrisch angeordnete Kameras 3 zum Aufnehmen von Bildern der Oberfläche 1 auf. Jede dieser Kameras hat einen Bildsensor 4, der in einer Bildebene der jeweiligen Kamera 3 angeordnet ist. Schließlich weist die Vorrichtung auch eine Steuer- und Auswerteeinheit 5 zum Ansteuern der Projektionsvorrichtung 2 und der Kameras 3 und zum Auswerten der damit aufgenommenen Bilder auf. Die Kameras 3 und die Projektionsvorrichtung 2 sind fest miteinander verbunden und haben also relativ zueinander eine feste und bekannte Anordnung und Orientierung. Eine dadurch bekannte innere Geometrie der Vorrichtung ermöglicht eine berührungslose Vermessung der Oberfläche 1 durch ein nachfolgend genauer beschriebenes Triangulationsverfahren.

Zunächst wird die Projektionsvorrichtung 2 durch die entsprechend eingerichtete Steuer- und Auswerteeinheit 5 so angesteuert, dass sie eine Folge verschiedener, jeweils aus einer Vielzahl von Streifen gebildeter Streifenmuster gleicher Streifenrichtung auf die Oberfläche 2 projiziert. Die Streifen sind dabei senkrecht zur Zeichenebene orientiert und stehen mithin senkrecht auf Epipolarlinien, die durch die Geometrie der Vorrichtung in den durch die Bildsensoren 4 aufgespannten Bildebenen der beiden Kameras 3 definiert sind. Bei den Streifenmustern handelt es sich dabei jeweils um aperiodische Streifenmuster, die in einer Umgebung jedes der Streifen einen jeweils sinusförmigen Helligkeitsverlauf haben, wobei sich eine Aperiodizität dieser Streifenmuster dadurch ergibt, dass eine Amplitude und/oder eine Ortsfrequenz der einzelnen Streifenmuster und/oder eine Phasenverschiebung zwischen den verschiedenen Streifenmustern nicht konstant gewählt ist, sondern vielmehr in einer zu den Streifen senkrechten Richtung - also von Streifen zu Streifen - kontinuierlich oder auch unstetig ändert. Die Kameras 3 werden durch die Steuer- und Auswerteeinheit 5 so angesteuert, dass jede dieser Kameras 3 während des Projizierens jedes der Streifenmuster jeweils ein Bild der Oberfläche 1 aufnimmt. So wird mit jeder der Kameras 3 jeweils eine Folge von Bildern aufgenommen, von denen jedes einem der Streifenmuster zuzuordnen ist, nämlich dem Streifenmuster, das gerade während der Aufnahme des jeweiligen Bildes projiziert wird.

Durch Auswerten der aufgenommenen Bilder mittels der entsprechend programmierten Steuer- und Auswerteeinheit 5 werden nun korrespondierende oder homologe Punkte in den Bildebenen der beiden Kameras 3 identifiziert, und zwar anhand der auf die Oberfläche 1 projizierten Streifenmuster. Als homolog oder korrespondierend werden dabei solche Punkte in den Bildebenen der beiden Kameras 3 bezeichnet, auf die jeweils ein gleicher Oberflächenpunkt der Oberfläche 1 abgebildet wird. Für einen ausgewählten Oberflächenpunkt 6, der auf die zwei korrespondierenden Punkte 7 abgebildet wird, ist das in Fig. 1 beispielhaft dargestellt. Zum Identifizieren der korrespondierenden Punkte wird dabei ausgenutzt, dass sich für jeden Punkt in den Bildebenen jeder der Kameras 3 mit der Folge projizierter Streifenmuster jeweils eine Folge von Helligkeitswerten ergibt, die sich in der mit der jeweiligen Kamera aufgenommenen Folge von Bildern wiederfindet und dadurch für jeden der Punkte erfasst wird.

Wegen der aperiodischen Natur der Streifenmuster sind diese Folgen von Helligkeitswerten quasi statistisch und unterscheiden sich insbesondere zumindest senkrecht zur Streifenrichtung von Oberflächenpunkt zu Oberflächenpunkt. Das ausnutzend werden die korrespondierenden Punkte nun jeweils durch Maximieren einer Korrelation identifiziert, die zwischen den für die potentiell korrespondierenden Punkte erfassten Folgen von Helligkeitswerten gebildet wird. Dazu wird eine - in weiten Grenzen beliebig wählbare - Korrelationsfunktion für eine Vielzahl von Paaren von Helligkeitswertefolgen ausgewertet und das Ergebnis dieser Auswertung - nämlich ein dadurch für jedes Paar verglichener Punkte ermittelter Korrelationswert - zum Auffinden der Paare korrespondierender bzw. homologer Punkte maximiert. Unter Ausnutzung der Epipolargeometrie wird die zu maximierende Korrelation bzw. Korrelationsfunktion dabei jeweils nur für Punkte auf korrespondierenden Epipolarlinien gebildet bzw. ausgewertet. Für jeden Punkt in der Bildebene einer ersten der beiden Kameras 3 wird also nur auf einer korrespondierenden Epipolarlinie in der Bildebene der verbleibenden Kamera 3 nach dem korrespondierenden Punkt gesucht. Die korrespondierenden Punkte können dabei mit einer Ortsauflösung gefunden wird, die höher ist als ein durch eine Pixelmatrix der Bildsensoren 4 definierte Bildauflösung, weil durch Interpolation auch für Punkte, die nicht exakt mit einer Pixelposition übereinstimmen, Helligkeitswerte und dementsprechend Folgen von Helligkeitswerten gebildet werden können.

Auf Basis der so als korrespondierend identifizierten Punkte in den Bildebenen der Kameras 3 werden nun durch die Steuer- und Auswerteeinheit 5 durch Triangulation Raumkoordinaten der Oberflächenpunkte der Oberfläche 1 bestimmt, was aufgrund der bekannten Geometrie der Vorrichtung durch Anwendung einfacher trigonometrischer Zusammenhänge geschehen kann.

Anstelle der beschriebenen Triangulation auf Basis der korrespondierenden Punkte in den Bildebenen zweier Kameras 3 kann bei einer Abwandlung des vorliegenden Ausführungsbeispiels auch auf Basis jeweils korrespondierender Punkte in einer Bildebene einzigen Kamera 3 einerseits und einer durch ein bildgebendes Medium aufgespannten Bildebene der Projektionsvorrichtung 2 andererseits trianguliert werden. Die korrespondierenden Punkte werden in diesem Fall analog in der Bildebene der dann einzigen Kamera 3 und in der Bildebene der Projektionsvorrichtung 2 identifiziert. Dazu wird an sich genauso vorgegangen, wobei sich die in diesem Fall für die Punkte in der Bildebene der Projektionsvorrichtung 2 zugrundezulegenden Folgen von Helligkeitswerten jeweils direkt aus den dann als bekannt vorauszusetzenden projizierten Streifenmustern ergeben.

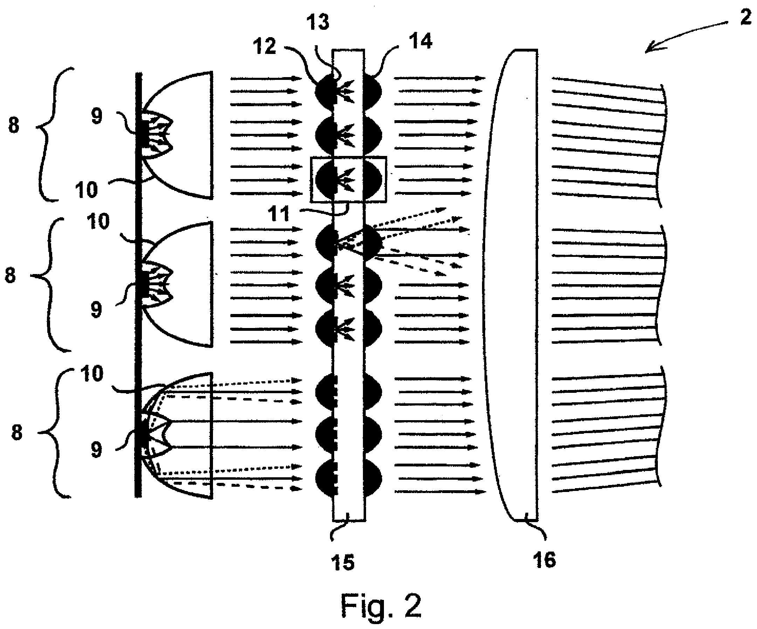

In Fig. 2 ist in Form eines Querschnitts ein Teil der Projektionsvorrichtung 2 gezeigt. Die Projektionsvorrichtung 2 weist eine Vielzahl einzelner Projektoren 8 auf, die in Form einer Matrix angeordnet sind und jeweils eine eigene Lichtquelle 9 aufweisen. Bei den Lichtquellen 9 handelt es sich um besonders rasch schaltbare LEDs. Anstelle der LEDs können bei Abwandlungen der beschriebenen Vorrichtung natürlich auch andere Lichtquellen verwendet werden, beispielsweise Laserdioden. Im Hinblick auf eine möglichst gute Ausnutzung einer Strahlungsleistung der Lichtquellen 9 und zur Vermeidung störender Einflüsse auf benachbarte Projektoren 8 ist für jede der Lichtquellen 9 ein konkaver Konzentrator 10 vorgesehen. Im vorliegenden Fall umfasst jeder der Projektoren 8 seinerseits mehrere durch die gleiche Lichtquelle 9 ausgeleuchtete Projektionseinheiten 11, von denen eine in Fig. 2 eingekastelt dargestellt ist und die jeweils eine Kondensorlinse 12, ein festes bildgebendes Medium 13 zur Erzeugung jeweils eines der Streifenmuster und eine Objektivlinse 14 aufweisen.

Bei den Projektoren 8 handelt es sich im vorliegenden Fall also um spezielle Durchlichtprojektoren, wobei die bildgebenden Medien 13 dieser Durchlichtprojektoren z.B. lithographisch hergestellt sein können. Dabei ist jeder der Projektoren 8 durch die festen bildgebenden Medien 13 zum Projizieren jeweils genau eines der Streifenmuster der projizierten Folge von Streifenmustern eingerichtet. Alle Projektionseinheiten 11 sind bei dem vorliegenden Ausführungsbeispiel auf einem gemeinsamen transparenten Substrat 15 realisiert, bei dem es sich um einen Glaswafer handelt und das auf einer den Lichtquellen 9 zugewandten Seite die bildgebenden Medien 13 und die Kondensorlinsen 12 und auf einer gegenüberliegenden Seite die Objektivlinsen 14 trägt. Schließlich weist die Projektionsvorrichtung 2 noch eine zur Strahlkorrektur dienende und alle Projektionseinheiten 11 überspannende makroskopische Linse 16 auf.

Dadurch, dass jeweils mehrere der Projektionseinheiten 11 zum gleichen Projektor 8 gehören und insbesondere zum Projizieren des jeweils gleichen Streifenmusters verwendet werden, lässt sich durch geringfügige Unterschiede zwischen den bildgebenden Medien 13 der Projektionseinheiten 11 des gleichen Projektors 8 - beispielsweise durch geringfügig unterschiedliche Streifenbreiten - eine gute Bildqualität der jeweils von den Projektionseinheiten 11 gemeinsam projizierten Streifenmuster realisieren. Insbesondere kann man dadurch einen lokal jeweils zumindest quasi sinusförmigen Helligkeitsverlauf auch dann realisieren, wenn die einzelnen bildgebenden Medien 13 nur jeweils zwei oder eine sehr begrenzte Anzahl von Grauwerten wiederzugeben geeignet sind.

Das Wechseln zwischen den verschiedenen Streifenmustern der projizierten Folge von Streifenmustern geschieht bei der hier beschriebenen Projektionsvorrichtung 2 dadurch, dass zwischen den Lichtquellen 9 der verschiedenen Projektoren 8 umgeschaltet wird. Dadurch lässt sich eine sehr hohe Bildwechselrate von bis zu etwa 100 kHz realisieren, so dass die zum Vermessen der Oberfläche 1 benötigte Folge von Streifenmustern insgesamt in verhältnismäßig kurzer Zeit projiziert werden kann und dementsprechend die auszuwertenden Bilder auch in sehr kurzer Zeit aufgenommen werden können.

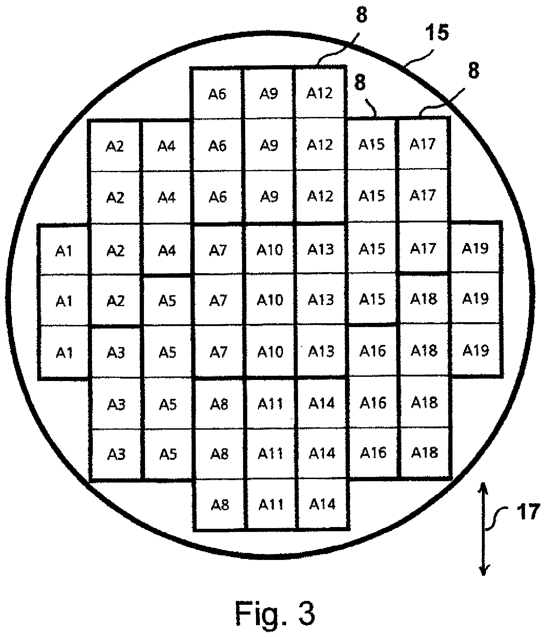

In Fig. 3 ist eine Aufsicht auf das Substrat 15 gezeigt, in der eine durch die Projektoren 8 gebildete Matrix zu erkennen ist. Die einzelnen Projektoren 8 sind dabei jeweils nur durch ein Quadrat veranschaulicht. Die Streifenrichtung der mit den Projektoren 8 projizierten Streifenmuster ist in Fig. 3 durch einen Doppelpfeil 17 veranschaulicht. Wie in Fig. 3 zu erkennen ist, sind die Projektoren 8 in mehreren parallel zur Streifenrichtung orientierten Spalten angeordnet. Dabei wird jedes der Streifenmuster jeweils mit mehreren der Projektoren 8 projiziert, wobei die zum Projizieren jeweils eines der Streifenmuster verwendeten Projektoren 8 jeweils aus einer der Spalten ausgewählt sind. Bei einer Abwandlung könnten übrigens auch stattdessen oder zusätzlich jeweils mehrere Projektoren 8 aus jeweils einer oder unmittelbar benachbarten Zeilen der Matrix zum Projizieren von Streifenmustern mit einer parallel zu den Zeilen orientierten Streifenrichtung projiziert werden. Auch wäre es möglich, die zum Projizieren jeweils eines der Streifenmuster verwendeten Projektoren 8 aus zwei unmittelbar benachbarten Spalten auszuwählen. Im vorliegenden Ausführungsbeispiel handelt es sich bei den projizierten Streifenmustern um insgesamt neunzehn verschiedene und durch Umschalten zwischen den Lichtquellen 8 sukzessive projizierte Streifenmuster A1 bis A19, wobei eine hier gewählte Verteilung der entsprechend der Reihenfolge der Projektion 8 nummerierten Streifenmuster auf die Projektoren 8 dadurch veranschaulicht ist, dass die Projektoren 8 jeweils mit der Bezeichnung des mit dem jeweiligen Projektor 8 projizierten Streifenmusters A1 bis A19 versehen ist. Jedes der Streifenmuster A1 bis A19 wird demnach mit jeweils drei oder vier der Projektoren 8 projiziert, deren drei bzw. vier Lichtquellen 9 zu diesem Zweck gleichzeitig ein- und ausgeschaltet werden.

Es ist natürlich möglich, die neunzehn Streifenmuster A1 bis A19 durch entsprechendes Ein- und Ausschalten der Lichtquellen 9 in zyklischer Reihenfolge fortlaufend zu projizieren. Durch eine entsprechende programmtechnische Einrichtung der Steuer- und Auswerteeinheit 5 kann die unter Umständen zeitlich veränderliche Oberfläche 1 dann kontinuierlich erfasst und vermessen werden, indem jeweils die zuletzt projizierten Streifenmuster - und zwar jeweils eine bestimmte Anzahl von Streifenmustern, die auch kleiner als zwanzig sein kann - als aktuelle Folge von Streifenmustern im Sinne des zuvor beschriebenen Verfahrens verwendet werden. Die genannte Anzahl kann dabei je nach Anforderung an Schnelligkeit der Vermessung oder Stabilität und Genauigkeit des Verfahrens kleiner oder größer gewählt werden, unter Umständen auch abhängig von einer Oberflächencharakteristik der Oberfläche 1.

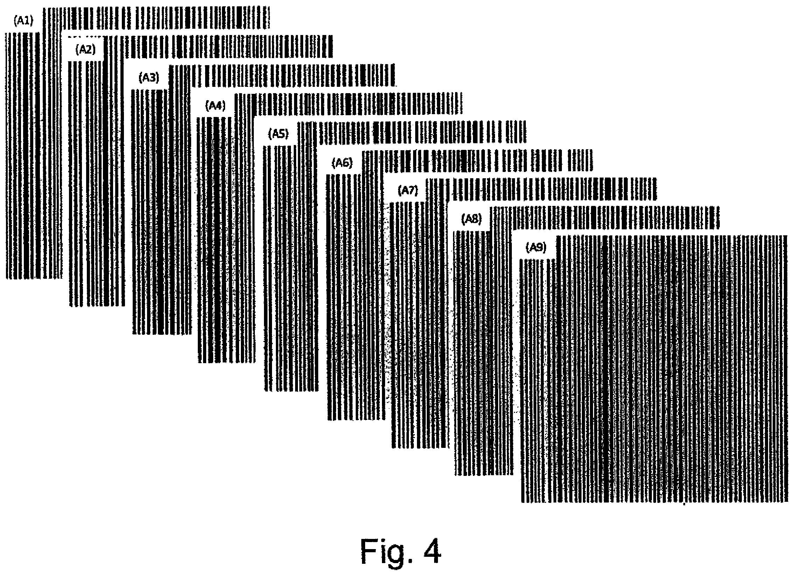

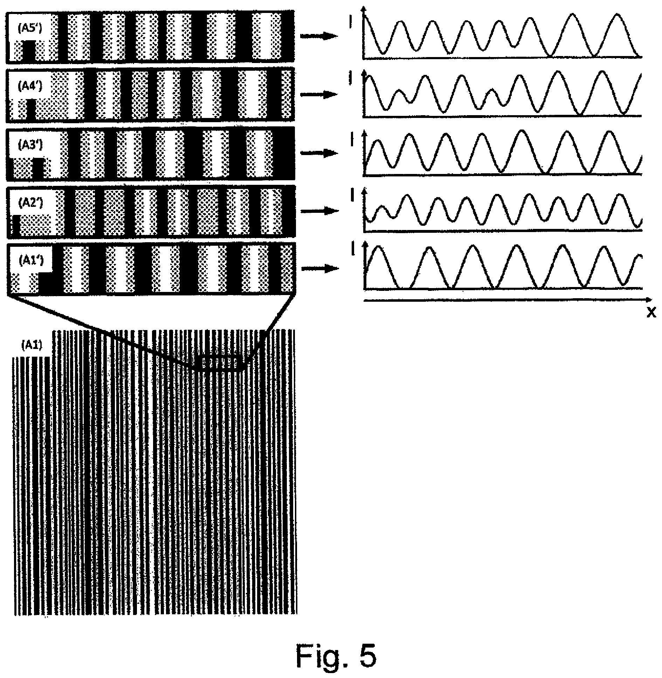

Zur Veranschaulichung einer möglichen Folge von Streifenmustern, die für das beschriebene Verfahren geeignet ist, sind in Fig. 4 neun der Streifenmuster, nämlich die Streifenmuster A1 bis A9, dargestellt. Diese Darstellung lässt sowohl den im oben beschriebenen Sinne aperiodischen Charakter der Streifenmuster A1 bis A9 als auch deren lokal jeweils sinusförmigen Helligkeitsverlauf erkennen. Anhand von fünf verschiedenen Ausschnitten A1' bis A5' der nur beispielhaft ausgewählten Streifenmuster A1 bis A5 zeigt Fig. 5 in diagrammatischer Darstellung die geschilderte Aperiodizität der Streifenmuster. Dabei ist für das beispielhaft noch einmal wiedergegebene Streifenmuster A1 gezeigt, wie der entsprechende Ausschnitte A1' gewählt ist. Für jeden der fünf Ausschnitte ist in Fig. 5 ein Diagramm wiedergegeben, das jeweils einen Helligkeitswert I des jeweiligen Ausschnitts A1' bis A5' eines der Streifenmuster A1 bis A5 in Abhängigkeit von einer Ortskoordinate x zeigt, wobei die Ortskoordinate x jeweils einen Ort auf einer senkrecht zur Streifenrichtung orientierten Koordinatenachse angibt. Wie in Fig. 5 gut zu erkennen ist, haben die Streifenmuster A1 bis A5 schon in den gezeigten kleinen Ausschnitten A1' bis A5' jeweils zwar einen lokal sinusförmigen Helligkeitsverlauf, dabei jedoch eine nicht konstante Amplitude, Ortsfrequenz und relative Phasenlage.

## Patentansprüche

1. Verfahren zum berührungslosen Vermessen dreidimensionaler Oberflächenkonturen, umfassend folgende Schritte:
- Projizieren einer Folge von jeweils aus einer Vielzahl von Streifen gebildeten Streifenmustern (A1-A19) gleicher Streifenrichtung auf eine zu vermessende Oberfläche (1) mittels einer Projektionsvorrichtung (2).
- während des Projizierens jedes der Streifenmuster (A1-A19) Aufnehmen jeweils mindestens eines Bildes der Oberfläche (1) mit einer Kamera (3) oder mit jeder von mindestens zwei Kameras (3),
- Identifizieren korrespondierender Punkte (7) in Bildebenen der Kamera (3) und der Projektionsvorrichtung (2) oder in Bildebenen der Kameras (3) mittels der auf die Oberfläche (1) projizierten Streifenmuster (A1-A19),
- Bestimmen von Raumkoordinaten von Oberflächenpunkten (6) auf der Oberfläche (1) durch Triangulation auf Basis der als korrespondierend identifizierten Punkte (7),
**dadurch gekennzeichnet,**
**dass** die Streifenmuster (A1-A19) jeweils aperiodisch sind und in einer Umgebung jedes der Streifen einen jeweils sinusförmigen Helligkeitsverlauf haben und dass die korrespondierenden Punkte (7) identifiziert werden durch Maximieren einer Korrelation zwischen für jeden der Punkte (7) erfassten Folgen von Helligkeitswerten.

2. Verfahren nach Anspruch 1, **dadurch gekennzeichnet, dass** eine Ortsfrequenz der einzelnen Streifenmuster (A1-A19) nicht konstant ist.

3. Verfahren nach einem der Ansprüche 1 oder 2, **dadurch gekennzeichnet, dass** die verschiedenen Streifenmuster (A1-A19) durch verschiedene in der Projektionsvorrichtung (2) enthaltene Projektoren (8) mit jeweils mindestens einer eigenen Lichtquelle (9) projiziert werden, wobei die Streifenmuster (A1-A19) beim Projizieren der Folge gewechselt werden, indem zwischen den Lichtquellen (9) der verschiedenen Projektoren (8) umgeschaltet wird.

4. Verfahren nach Anspruch 3, **dadurch gekennzeichnet, dass** die Projektoren (8) in mehreren parallel zur Streifenrichtung orientierten Zeilen oder Spalten angeordnet sind, wobei jedes der Streifenmuster (A1-A19) jeweils mit mehreren der Projektoren (8) projiziert wird, wobei die zum Projizieren jeweils eines der Streifenmuster (A1-A19) verwendeten Projektoren (8) jeweils aus einer der Zeilen oder Spalten oder aus unmittelbar benachbarten Zeilen oder Spalten ausgewählt werden.

5. Verfahren nach einem der Ansprüche 1 bis 4, **dadurch gekennzeichnet, dass** zum kontinuierlichen Erfassen der Oberfläche (1) fortlaufend wechselnde Streifenmuster (A1-A19) mit der Projektionsvorrichtung (2) auf die Oberfläche (1) projiziert werden, wobei die genannte Folge von Streifenmustern (A1-A10), die zum Identifizieren der korrespondierenden Punkte (7) verwendet wird, jeweils durch eine Untermenge dieser projizierten Streifenmuster (A1-A19) gebildet wird, die aus einer definierten Anzahl unmittelbar aufeinander folgender Streifenmuster (A1-A19) besteht.

6. Verfahren nach einem der Ansprüche 1 bis 5, **dadurch gekennzeichnet, dass** zum Identifizieren der korrespondierenden Punkte (7) die zu maximierende Korrelation jeweils nur für Punkte auf korrespondierenden Epipolarlinien in den Bildebenen bestimmt wird.

7. Vorrichtung zum berührungslosen Vermessen dreidimensionaler Oberflächenkonturen, umfassend eine Projektionsvorrichtung (2) zum Projizieren von Streifenmustern in einen Objektraum, eine Kamera (3) oder mindestens zwei Kameras (3) zum Aufnehmen von Bildern einer zu vermessenden Oberfläche (1) im Objektraum und eine Steuer- und Auswerteeinheit (5) zum Ansteuern der Projektionsvorrichtung (2) und der Kamera (3) oder der Kameras (3) und zum Auswerten der damit aufgenommenen Bilder, wobei die Steuer- und Auswerteeinheit (5) eingerichtet ist,
- die Projektionsvorrichtung (2) zum Projizieren einer Folge von jeweils aus einer Vielzahl von Streifen gebildeten Streifenmustern (A1-A19) gleicher Streifenrichtung anzusteuern,
- die Kamera (3) oder jede der Kameras (3) zum Aufnehmen jeweils mindestens eines Bildes der Oberfläche (1) während des Projizierens jedes der Streifenmuster (A1-A19) anzusteuern,
- korrespondierende Punkte (7) in Bildebenen der Kamera (3) und der Projektionsvorrichtung (2) oder in Bildebenen der Kameras (3) mittels der projizierten Streifenmuster (A1-A19) zu identifizieren und
- Raumkoordinaten von Oberflächenpunkten (6) auf der Oberfläche (1) durch Triangulation auf Basis der als korrespondierend identifizierten Punkte (7) zu bestimmen,
**dadurch gekennzeichnet,**
**dass** die Projektionsvorrichtung (2) eingerichtet ist, die Streifenmuster (A1-A19) jeweils als aperiodische Streifenmuster (A1-A19) zu projizieren, die in einer Umgebung jedes der Streifen einen jeweils sinusförmigen Helligkeitsverlauf haben, und dass die Steuer- und Auswerteeinheit (5) eingerichtet ist, die korrespondierenden Punkte (7) durch Maximieren einer Korrelation zwischen für jeden der Punkte erfassten Folgen von Helligkeitswerten zu identifizieren.

8. Vorrichtung nach Anspruch 7, **dadurch gekennzeichnet, dass** eine Ortsfrequenz der einzelnen Streifenmuster (A1-A19) nicht konstant ist.

9. Vorrichtung nach einem der Ansprüche 7 oder 8, **dadurch gekennzeichnet, dass** die Projektionsvorrichtung (2) eine Vielzahl von Projektoren (8) mit jeweils mindestens einer eigenen Lichtquelle (9) enthält, von denen jeder zum Projizieren jeweils eines der Streifenmuster (A1-A19) eingerichtet ist, wobei die Steuer- und Auswerteeinheit (5) eingerichtet ist, die Projektionsvorrichtung (2) durch Umschalten zwischen den Lichtquellen (9) der verschiedenen Projektoren (8) zum Wechseln der Streifenmuster (A1-A19) beim Projizieren der Folge von Streifenmustern (A1-A19) anzusteuern.

10. Vorrichtung nach Anspruch 9, **dadurch gekennzeichnet, dass** die Projektoren (8) in mehreren parallel zur Streifenrichtung orientierten Zeilen oder Spalten angeordnet sind, wobei jeweils mehrere der Projektoren (8) zum Projizieren jedes der Streifenmuster (A1-A19) eingerichtet sind, wobei die zum Projizieren jeweils eines der Streifenmuster (A1-A19) eingerichteten Projektoren (8) jeweils in einer der Zeilen oder Spalten oder in unmittelbar benachbarten Zeilen oder Spalten angeordnet sind.

11. Vorrichtung nach einem der Ansprüche 9 oder 10, **dadurch gekennzeichnet, dass** die Projektoren (8) Durchlichtprojektoren sind und jeweils mindestens eine Projektionseinheit (11) mit einer Kondensorlinse (12), einem festen bildgebenden Medium (13) zur Erzeugung des jeweiligen Streifenmusters (A1-A19) und einer Objektivlinse (14) aufweisen.

12. Vorrichtung nach Anspruch 11, **dadurch gekennzeichnet, dass** die Projektionseinheiten (11) auf einem gemeinsamen transparenten Substrat (15) realisiert sind.

13. Vorrichtung nach einem der Ansprüche 9 bis 12, **dadurch gekennzeichnet, dass** die Lichtquellen (9) jeweils durch eine oder mehrere LEDs oder Laserdioden gegeben sind und/oder dass jeder der Projektoren (8) jeweils mehrere durch die gleiche Lichtquelle (9) ausgeleuchtete Projektionseinheiten (11) umfasst.

14. Vorrichtung nach einem der Ansprüche 7 bis 13, **dadurch gekennzeichnet, dass** die Steuer- und Auswerteeinheit (5) eingerichtet ist, zum kontinuierlichen Erfassen der Oberfläche (1) die Projektionsvorrichtung (2) zum Projizieren fortlaufend wechselnder Streifenmuster (A1-A19) anzusteuern und die genannte zum Identifizieren korrespondierender Punkte (7) verwendete Folge von Streifenmustern (A1-A19) jeweils durch eine Untermenge dieser projizierten Streifenmuster (A1-A19) zu bilden, die aus einer definierten Anzahl unmittelbar aufeinander folgender Streifenmuster (A1-A19) besteht.

15. Vorrichtung nach einem der Ansprüche 7 bis 14, **dadurch gekennzeichnet, dass** die Steuer- und Auswerteeinheit (5) eingerichtet ist, zum Identifizieren der korrespondierenden Punkte (7) die zu maximierende Korrelation jeweils nur für Punkte auf korrespondierenden Epipolarlinien in den Bildebenen zu bestimmen.

## Claims

1. A method for contact-free measurement of three-dimensional surface contours, comprising the following steps:
- projecting a sequence of strip patterns (A1-A19) of an equal strip direction which are formed in each case from a multitude of strips, onto a surface (1) to be measured, by way of a projection device (2),
- in each case taking at least one picture of the surface (1) by a camera (3) or by each of at least two cameras (3), during the projecting of each of the strip patterns (A1-A19),
- identifying corresponding points (7) in picture planes of the camera (3) and of the projection device (2) or in picture planes of the cameras (3), by means of the strip patterns (A1-A19) which are projected onto the surface (1),
- determining spatial coordinates of surface points (6) on the surface (1) by triangulation on the basis of the points (7) identified as being corresponding,
**characterised in that**
the strip patterns (A1-A19) are each aperiodic and in an environment of each of the strips have a brightness course which is sinusoidal and that the corresponding points (7) are identified by way of maximising a correlation between sequences of brightness values which are detected for each of the points (7).

2. The method of claim 1, **characterised in that** a spatial frequency of the individual strip patterns (A1-A19) is not constant.

3. The method of any of claims 1 or 2, **characterised in that** the different strip patterns (A1-A19) are projected by way of different projectors (8) which are contained in the projection device (2), each having at least one individual light source (9), wherein the strip patterns (A1-A19) are changed on projecting the sequence, by way of switching between the light sources (9) of the different projectors (8).

4. The method of claim 3, **characterised in that** the projectors (8) are arranged in several rows or columns which are orientated parallel to the strip direction, wherein each of the strip patterns (A1-A19) is projected in each case with several of the projectors (8), wherein the projectors (8) which are used for projecting in each case one of the strip patterns (A1-A19) are selected in each case from one of the rows or columns or from directly adjacent rows or columns.

5. The method of any of claims 1 to 4, **characterised in that** continuously changing strip patterns (A1-A19) are projected by the projection device (2) onto the surface (1), for the continuous detection of the surface (1), wherein the mentioned sequence of strip patterns (A1-A19) which is used for identifying the corresponding points (7) is formed in each case by a subset of these projected strip patterns (A1-A19) which consists of a defined number of directly consecutive strip patterns (A1-A19).

6. The method of any of claims 1 to 5, **characterised in that** the correlation to be maximised is determined in each case only for points on corresponding epipolar lines in the picture planes, for identifying the corresponding points (7).

7. A device for contact-free measurement of three-dimensional surface contours, comprising a projection device (2) for projecting strip patterns into an object space, a camera (3) or at least two cameras (3) for taking pictures of a surface (1) to be measured in the object space, and a control and evaluation unit (5) for activating the projection device (2) and the camera (3) or the cameras (3) and for evaluating the pictures which are taken by these, wherein the control and evaluation device (5) is configured
- to activate the projection device (2) for projecting a sequence of strip patterns (A1-A19) of an equal strip direction which are formed in each case from a multitude of strips,
- to activate the camera (3) or each of the cameras (3) for taking in each case at least one picture of the surface (1) during the projection of each of the strip patterns (A1-A19),
- to indentify corresponding points (7) in picture planes of the camera (3) and of the projection device (2) or in picture planes of the cameras (3), by means of the projected strip patterns (A1-A19) and
- to determine spatial coordinates of surface points (6) on the surface (1) by way of triangulation on the basis of the points (7) which are identified as being corresponding,
**characterised in that**
the projection device (2) is configured to project the strip patterns (A1-A19) in each case as aperiodic strip patterns (A1-A19) which in an environment of each of the strips have a brightness course which is sinusoidal, and that the control and evaluation unit (5) is configured to identify the corresponding points (7) by way of maximising a correlation between sequences of brightness values which are detected for each of the points.

8. The device of claim 7, **characterised in that** a spatial frequency of the individual strip patterns (A1-A19) is not constant.

9. The device of any of claims 7 or 8, **characterised in that** the projection device (2) comprises a multitude of projectors (8), each having at least one individual light source (9), each of the projectors being configured for projecting one of the strip patterns (A1-A19) in each case, wherein the control and evaluation unit (5) is configured to activate the projection device (2) by way of switching between the light sources (9) of the different projectors (8) for changing the strip patterns (A1-A19) on projecting the sequence of strip patterns (A1-A19).

10. The device of claim 9, **characterised in that** the projectors (8) are arranged in several rows or columns which are orientated parallel to the strip direction, wherein in each case several of the projectors (8) are configured for projecting each of the strip patterns (A1-A19), wherein the projectors (8) which are configured to project one of the strip patterns (A1-A19) are arranged in each case in one of the rows or columns or in directly adjacent rows or columns.

11. The device of any of claims 9 or 10, **characterised in that** the projectors (8) are transmitted-light projectors and each comprise at least one projection unit (11) having a condenser lens (12), a fixed imaging medium (13) for producing the respective strip pattern (A1-A19), and an objective lens (14).

12. The device of claim 11, **characterised in that** the projection units (11) are implemented on a common transparent substrate (15).

13. The device of any of claims 9 to 12, **characterised in that** the light sources (9) are given in each case by one or more LEDs or laser diodes and/or that each of the projectors (8) comprises several projection units (11), which are illuminated by the same light source (9).

14. The device of any of claims 7 to 13, **characterised in that** the control and evaluation unit (5), for the continuous detection of the surface (1), is configured to activate the projection device (2) for projecting continuously changing strip patterns (A1-A19), and to form the mentioned sequence of strip patterns (A1-A19) which is used for indentifying corresponding points (7), in each case by way of a subset of these projected strip patterns (A1-A19) which consists of a defined number of directly consecutive strip patterns (A1-A19).

15. The device of any of claims 7 to 14, **characterised in that** the control and evaluation unit (5), for identifying the corresponding points (7), is configured to determine the correlation to be maximised, in each case only for points on corresponding epipolar lines in the picture planes.

## Revendications

1. Procédé pour la mesure sans contact de contours de surfaces tridimensionnelles, comprenant les étapes suivantes :
- projection d'une suite de motifs de bandes (A1 à A19) formés respectivement d'une multitude de bandes de même orientation de bandes sur une surface (1) à mesurer au moyen d'un dispositif de projection (2),
- pendant la projection de chacun des motifs de bandes (A1 à A19), prise d'au moins une image de la surface (1) avec une caméra (3) ou avec chacune d'au moins deux caméras (3),
- identification de points (7) correspondants dans des plans d'images de la caméra (3) et du dispositif de projection (2), ou dans des plans d'images des caméras (3) au moyen des motifs de bandes (A1 à A19) projetés sur la surface (1),
- détermination de coordonnées spatiales de points de surface (6) sur la surface (1) par une triangulation sur la base des points (7) identifiés comme étant correspondants,
**caractérisé en ce**
**que** les motifs de bandes (A1 à A19) sont respectivement apériodiques et ont, dans un environnement de chacune des bandes, respectivement une évolution de la luminosité de forme sinusoïdale et que les points (7) correspondants sont identifiés par une maximisation d'une corrélation entre des suites de valeurs de la luminosité saisies pour chacun des points (7).

2. Procédé selon la revendication 1, **caractérisé en ce qu'**une fréquence spatiale des motifs de bandes (A1 à A19) individuels n'est pas constante.

3. Procédé selon l'une des revendications 1 ou 2, **caractérisé en ce que** les divers motifs de bandes (A1 à A19) sont projetés par divers projecteurs (8) contenus dans le dispositif de projection (2) avec respectivement au moins une source lumineuse (9) propre, les motifs de bandes (A1 à A19), lors de la projection de la suite, étant changés par le fait que l'on effectue une commutation entre les sources lumineuses (9) des divers projecteurs (8).

4. Procédé selon la revendication 3, **caractérisé en ce que** les projecteurs (8) sont disposés en plusieurs lignes ou colonnes orientées parallèlement par rapport à l'orientation des bandes, chacun des motifs de bande (A1 à A19) étant projeté respectivement avec plusieurs des projecteurs (8), où les projecteurs (8) employés pour la projection respectivement de l'un des motifs de bandes (A1 à A19) sont choisis respectivement parmi l'une des lignes ou colonnes ou parmi des lignes ou colonnes immédiatement voisines.

5. Procédé selon l'une des revendications 1 à 4, **caractérisé en ce que**, pour une détection en continu de la surface (1), continuellement, des motifs de bandes (A1 à A19) changeant en continu sont projetés sur la surface (1) avec le dispositif de projection (2), où ladite suite de motifs de bandes (A1 à A10) qui est employée pour l'identification des points (7) correspondants, respectivement est formée par un sous-ensemble de ces motifs de bandes (A1 à A19) projetés, qui est constitué par un nombre défini de motifs de bandes (A1 à A19) se succédant immédiatement les unes aux autres.

6. Procédé selon l'une des revendications 1 à 5, **caractérisé en ce que**, pour l'identification des points (7) correspondants, la corrélation à maximiser est déterminée respectivement uniquement pour des points sur des lignes épipolaires correspondantes dans les plans d'images.

7. Dispositif pour la mesure sans contact de contours de surfaces tridimensionnelles, comprenant un dispositif de projection (2) pour la projection de motifs de bandes dans un espace d'objet, une caméra (3) ou au moins deux caméras (3) pour la prise d'images d'une surface (1) à mesurer dans l'espace d'objet et une unité de commande et d'évaluation (5) pour la commande du dispositif de projection (2) et de la caméra (3), ou des caméras (3), et pour l'évaluation des images prises avec celles-ci, où l'unité de commande et d'évaluation (5) étant conçue, pour
- la commande du le dispositif de projection (2), pour projeter d'une suite de motifs de bandes (A1 à A19) formés respectivement d'une multitude de bandes de même orientation de bandes,
- la commande de la caméra (3) ou chacune des caméras (3), pour la prise respectivement d'au moins une image de la surface (1) pendant la projection de chacun des motifs de bandes (A1 à A19),
- l'identification des points (7) correspondants dans des plans d'images de la caméra (3) et du dispositif de projection (2) ou dans des plans d'images des caméras (3) au moyen des motifs de bandes (A1 à A19) projetés, et
- la détermination des coordonnées spatiales de points de surface (6) sur la surface (1) par une triangulation sur la base des points (7) identifiés comme étant correspondants,
**caractérisé en ce**
**que** le dispositif de projection (2) est conçu pour projeter les motifs de bandes (A1 à A19) respectivement sous forme de motifs de bandes (A1 à A19) apériodiques qui ont respectivement, dans un voisinage de chacune des bandes, une évolution de la luminosité de forme sinusoïdale et que l'unité de commande et d'évaluation (5) est conçue pour identifier les points (7) correspondants par une maximisation d'une corrélation entre des suite de valeurs de la luminosité saisies pour chacun des points.

8. Dispositif selon la revendication 7, **caractérisé en ce qu'**une fréquence spatiale des motifs de bandes (A1 à A19) individuels n'est pas constante.

9. Dispositif selon l'une des revendications 7 ou 8, **caractérisé en ce que** le dispositif de projection (2) contient une multitude de projecteurs (8) avec respectivement au moins une source lumineuse (9) propre, parmi lesquels chacun est conçu pour la projection respectivement de l'un des motifs de bandes (A1 à A19), l'unité de commande et d'évaluation (5) étant conçue pour commander le dispositif de projection (2) par une commutation entre les sources lumineuses (9) des divers projecteurs (8) pour le changement des motifs de bandes (A1 à A19) lors de la projection de la suite des motifs de bandes (A1 à A19).

10. Dispositif selon la revendication 9, **caractérisé en ce que** les projecteurs (8) sont disposés en plusieurs lignes ou colonnes orientées parallèlement par rapport à l'orientation des bandes, où respectivement plusieurs des projecteurs (8) étant conçus pour la projection de chacun des motifs de bandes (A1 à A19), les projecteurs (8) conçus pour la projection respectivement de l'un des motifs de bandes (A1 à A19) étant disposés respectivement dans l'une des lignes ou colonnes ou dans des lignes ou colonnes immédiatement voisines.

11. Dispositif selon l'une des revendications 9 ou 10, **caractérisé en ce que** les projecteurs (8) sont des projecteurs de lumière transmise et présentent chacun au moins une unité de projection (11) avec une lentille de condenseur (12), un moyen (13) de formation d'images fixe pour la création d'un motif de bandes (A1 à A19) respectif et une lentille d'objectif (14).

12. Dispositif selon la revendication 11, **caractérisé en ce que** les unités de projection (11) sont réalisées sur un substrat (15) commun transparent.

13. Dispositif selon l'une des revendications 9 à 12, **caractérisé en ce que** les sources lumineuses (9) sont réalisées respectivement par une ou plusieurs diodes électroluminescentes ou diodes laser et/ou que chacun des projecteurs (8) comprend respectivement fois plusieurs unités de projection (11) illuminées par la même source lumineuse (9).

14. Dispositif selon l'une des revendications 7 à 13, **caractérisé en ce que** l'unité de commande et d'exploitation (5) est conçue pour commander le dispositif de projection (2) pour la projection en continu de motifs de bandes (A1 à A19) pour la détection en continu de la surface (1) et pour former ladite suite de motifs de bandes (A1 à A19) employée pour l'identification de points (7) correspondants, respectivement par un sous-ensemble de ces motifs de bandes (A1 à A19) projetés, qui est constitué à partir d'un nombre défini de motifs de bandes (A1 à A19) immédiatement successifs les uns aux autres.

15. Dispositif selon l'une des revendications 7 à 14, **caractérisé en ce que** l'unité de commande et d'évaluation (5) est conçue pour l'identification des points (7) correspondants qui déterminent la corrélation à maximiser respectivement uniquement pour des points sur des lignes épipolaires correspondantes dans les plans d'images.
